(19) Europäisches Patentamt
European Patent Office
Office européen des brevets

(11) EP 4 644 971 A1

(12) **EUROPEAN PATENT APPLICATION**
published in accordance with Art. 153(4) EPC

(43) Date of publication:
**05.11.2025 Bulletin 2025/45**

(21) Application number: **23911677.5**

(22) Date of filing: **12.12.2023**

(51) International Patent Classification (IPC):
**G02B 27/28** (2006.01)      **G02B 5/30** (2006.01)

(52) Cooperative Patent Classification (CPC):
**G02B 5/30; G02B 27/28**

(86) International application number:
**PCT/JP2023/044327**

(87) International publication number:
**WO 2024/142896 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2022 JP 2022212535**

(71) Applicant: **SHIN-ETSU CHEMICAL CO., LTD. Tokyo 1000005 (JP)**

(72) Inventor: **WATANABE, Toshiaki Annaka-shi, Gunma 379-0195 (JP)**

(74) Representative: **Schicker, Silvia Wuesthoff & Wuesthoff Patentanwälte und Rechtsanwalt PartG mbB Schweigerstraße 2 81541 München (DE)**

(54) **OPTICAL ISOLATOR AND OPTICAL ISOLATOR MANUFACTURING METHOD**

(57)     The present invention is an optical axis shift type optical isolator including a polarizer and a Faraday rotator and an optical isolator chip in which the polarizer and the Faraday rotator are bonded and integrated to form the optical isolator chip, in which an incident surface of the optical isolator chip is a surface inclined at an angle of 40° (degrees) or less with respect to an optical axis of incident light toward the optical isolator, the incident surface of the optical isolator chip is a surface inclined with respect to a central axis of the optical isolator chip in the direction of light travel, the central axis of the optical isolator chip is inclined with respect to the optical axis of the incident light toward the optical isolator, a shift length $\Delta T$ (mm) between the optical axis of the incident light toward the optical isolator and an optical axis of emitted light from the optical isolator and an inclination displacement length $\Delta C$ (mm) between an emission surface side and an incident surface side of the optical isolator chip, satisfy $|\Delta T - \Delta C| \leq 0.10$ (mm). This provides the optical isolator that can obtain a large amount of beam shift without degrading the optical characteristics of the optical isolator, while being small in optical device size.

[FIG. 1]

## Description

TECHNICAL FIELD

The present invention relates to an optical isolator used in, for example, optical communication and optical measurement, and a method for producing an optical isolator.

BACKGROUND ART

In optical communication and optical measurement, laser oscillation becomes unstable when light emitted from a laser is reflected by a surface of a member provided somewhere along a transmission line and returns to the laser source as reflected light. In order to block this reflected return light, an optical isolator is used, which includes a Faraday rotator to rotate a polarization plane in a non-reciprocal manner.

CITATION LIST

PATENT LITERATURE

Patent Document 1: JP 2018-36594 A

SUMMARY OF INVENTION

TECHNICAL PROBLEM

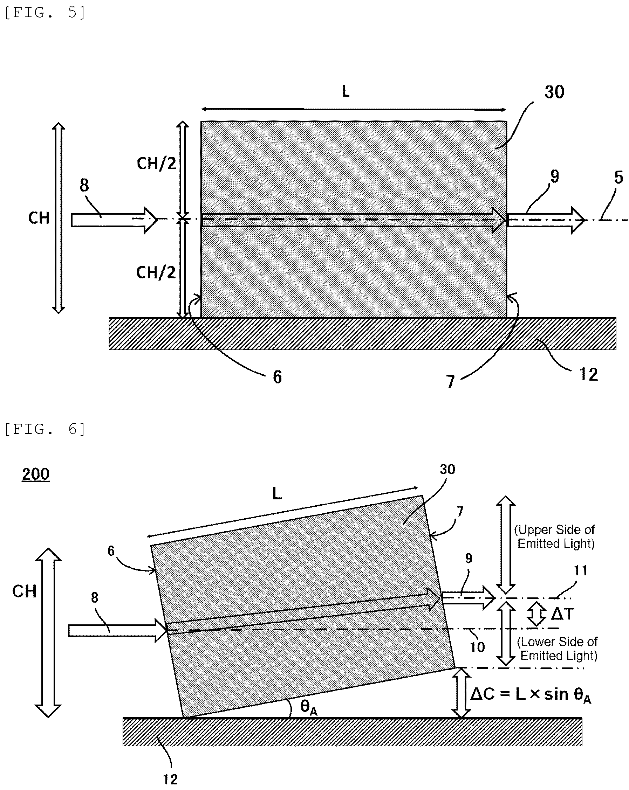

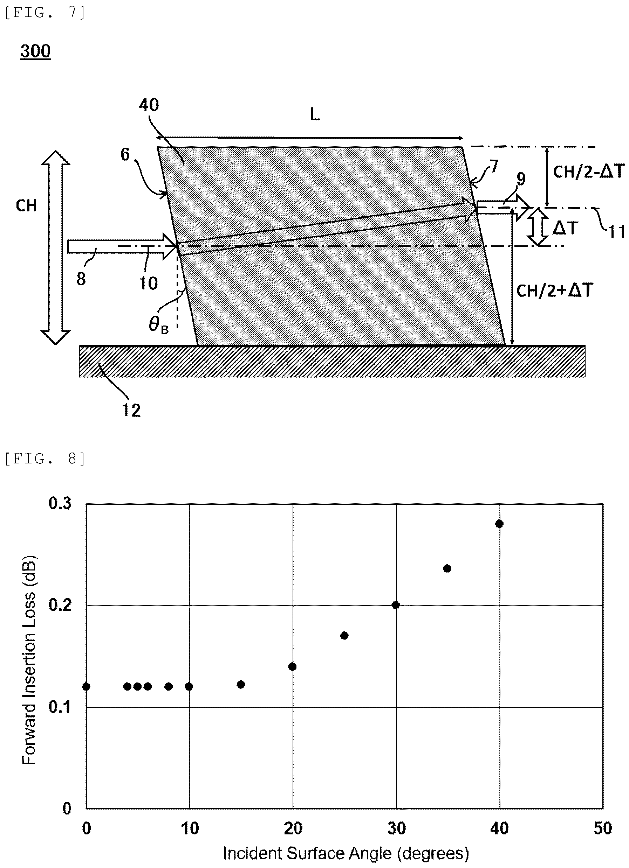

An optical isolator is used in a laser module for optical communication. An inclination angle of an incident surface at the time of installation is arranged to have 2 to 6° (degrees) with respect to an incident light axis. To set an incident angle, an inclination angle of the incident surface 6 with respect to an optical axis 10 of an incident light 8 is set by either of following processes: arranging an optical isolator chip 30 in which an incident surface 6 is processed perpendicular to an axis of the optical isolator chip 30 as shown in FIG. 5, which is inclined at a desired angle $\theta_A$ = 2 to 6° (degrees) (FIG. 6); or installing a side of an isolator chip 40 in which an incident surface 6 has been pre-processed with inclination at angle $\theta_B$ = 2 to 6° (degrees) with respect to an axis of the optical isolator chip 40 onto a base 12 that includes a magnet (FIG. 7). However, these methods have problems such as increase in size. Hereinafter, a further detailed description will be provided.

FIG. 5 is a drawing illustrating an optical isolator according to the first conventional example and shows the optical isolator chip 30 in which the incident surface 6 is a surface perpendicular with respect to a central axis 5 of the optical isolator chip in a direction of light travel. This optical isolator chip 30 is an example having a cuboid shape. FIG. 6 is an optical isolator 200 in the first conventional example obtained by arranging the optical isolator chip 30 shown in FIG. 5 with an inclination of an angle $\theta_A$ = 2 to 6° (degrees). In the optical isolator 200 in FIG. 6, when the incident light 8 is set to the center of the incident surface 6 of the optical isolator chip, a central position of an emitted light 9 at an emission surface 7 is positioned at a lower position due to a generation of an optical axis shift (equivalent to shift length $\Delta T$) of an optical axis 11 of the emitted light 9. When viewed from the optical axis portion, with a chip height defined as CH as shown in FIG. 6, the distance from the position of the optical axis 11 (beam center) at the emission surface 7 to an upper chip edge is CH/2 + $\Delta T$ and the distance to a lower chip edge is CH/2 - $\Delta T$. In this case, in order to secure a required effective diameter corresponding to a transmitted beam diameter, techniques such as enlarging CH, or shifting an optical axis center of the incident light upward to displace a position of an optical axis center of the emitted light upward are used to secure an effective diameter.

In addition, in an optical isolator 300 according to the second conventional example shown in FIG. 7, by using the incident surface 6 of the isolator chip 40 that has been pre-processed with an inclination, the side of the isolator chip can be held by the base 12 during the assembly of the optical isolator. When the incident light 8 is set to the center of the incident surface 6 of the chip, the emitted light 9 is positioned upward from the center of the emission surface 7 due to a generation of the shift (equivalent to shift length $\Delta T$) of the optical axis 11 of the emitted light 9. When viewed from the optical axis portion, the distance from the position of the optical axis 11 (beam center) to an upper chip edge is CH/2 - $\Delta T$, and the distance to a lower chip edge is CH/2 + $\Delta T$. In this case, in order to secure a required effective diameter corresponding to a transmitted beam diameter, techniques such as enlarging CH, or shifting an optical axis center of the incident light downward to displace a position of an optical axis center of the emitted light downward are used to secure an effective diameter.

When the optical isolator chip 30 in a cuboid shape (FIG. 5) is used to be installed in an inclined manner (FIG. 6), a significant inclination of the incident surface 6 leads to an increase in the height of the optical isolator chip 30 by an amount corresponding to L $\times$ sin$\theta_A$ (=$\Delta C$) in a height direction following the inclination of a chip length L. Note that $\Delta C$ is referred to as "inclination displacement length." Moreover, in either of the shapes shown in FIGs. 6 and 7, when the incident surface 6, the emission surface 7, and the effective beam diameter are considered, it is required to elevate (extend) the chip height CH (length in the height direction). In this case, the cost of the isolator chip is increased due to the enlargement of an area of expensive optical devices. Moreover, even when the area of the optical devices is enlarged, a light beam transmission area becomes relatively smaller, increasing material waste.

In addition, in recent years, high-density mounting has been performed in optical communication. In such approaches, efforts have been made to insert components to adjust an optical axis in a module (for example, Patent Document 1).

However, when further space-saving is considered, an inclusion of the components for adjusting the optical axis, as disclosed in Patent Document 1, is increasingly difficult. An optical isolator in a small optical device size that can obtain a large amount of beam shift without degrading optical characteristics of the optical isolator is required.

The present invention has been made to solve the above-described problem. An object of the present invention is to provide an optical isolator in a small optical device size that can obtain a large amount of beam shift (optical axis shift) without degrading optical characteristics of the optical isolator and a method for producing such an optical isolator.

SOLUTION TO PROBLEM

To achieve the object, the present invention provides an optical axis shift type optical isolator comprising one or more polarizers and one or more Faraday rotators arranged in a direction of light travel, and an optical isolator chip in which the polarizer and the Faraday rotator are bonded and integrated to form the optical isolator chip, wherein

an incident surface of the optical isolator chip in the optical isolator is a surface inclined at an angle of 40° (degrees) or less with respect to an optical axis of incident light toward the optical isolator,
the incident surface of the optical isolator chip is a surface inclined with respect to a central axis of the optical isolator chip in the direction of light travel,
the central axis of the optical isolator chip in the direction of light travel is inclined with respect to the optical axis of the incident light toward the optical isolator,
a shift length $\Delta T$ (mm) between the optical axis of the incident light toward the optical isolator and an optical axis of emitted light from the optical isolator, and an inclination displacement length $\Delta C$ (mm) between an emission surface side and an incident surface side of the optical isolator chip caused by the inclination of the central axis of the optical isolator chip in the direction of light travel, satisfy

$$|\Delta T - \Delta C| \leq 0.10 \ (\text{mm}).$$

According to such an optical isolator, the optical isolator can be configured to have a small optical device size while obtaining a large amount of beam shift (optical axis shift), and to secure a maximum effective diameter without degrading optical characteristics of the optical isolator.

In this case, the optical axis shift type optical isolator can be configured such that the incident surface of the optical isolator chip in the optical isolator is a surface inclined at an angle of 8° (degrees) or more with respect to the optical axis of the incident light toward the optical isolator.

This results in the optical axis shift type optical isolator that can obtain a larger amount of beam shift.

In this case, the optical axis shift type optical isolator can be configured such that one side of the optical isolator chip is arranged at an incline on a planar base including a magnet.

This results in the optical axis shift type optical isolator that can have a simpler structure.

To achieve the object, the present invention provides a method for producing an optical axis shift type optical isolator comprising one or more polarizers and one or more Faraday rotators arranged in a direction of light travel, and an optical isolator chip in which the polarizer and the Faraday rotator are bonded and integrated to form the optical isolator chip, the method comprising:

setting an incident surface of the optical isolator chip as a surface inclined with respect to a central axis of the optical isolator chip in the direction of light travel;
arranging the optical isolator chip such that the central axis of the optical isolator chip in the direction of light travel is inclined with respect to an optical axis of incident light toward the optical isolator; and
setting the incident surface of the optical isolator chip as a surface inclined at an angle of 40° (degrees) or less with respect to the optical axis of the incident light toward the optical isolator, and satisfying $|\Delta T - \Delta C| \leq 0.10$ (mm) in which a shift length $\Delta T$ (mm) is the length between the optical axis of the incident light toward the optical isolator and an optical axis of emitted light from the optical isolator, and an inclination displacement length $\Delta C$ (mm) is the length between an emission surface side and an incident surface side of the optical isolator chip caused by the inclination of the central axis of the optical isolator chip in the direction of light travel.

According to such a method for producing an optical isolator, it is possible to produce the optical isolator that has a small optical device size while obtaining a large amount of beam shift (optical axis shift) and secures a maximum effective diameter without degrading the optical characteristics of the optical isolator.

In this case, the method for producing an optical axis shift type optical isolator can be provided, in which the incident surface of the optical isolator chip is a surface inclined at an angle of 8° (degrees) or more with respect to the optical axis of the incident light toward the optical isolator.

This enables the production of the optical axis shift type optical isolator that can obtain a larger amount of beam shift.

In this case, the method for producing an optical axis shift type optical isolator can be provided, in which one side of the optical isolator chip is arranged at an inclination on a planar base including a magnet, such that the central axis of the optical isolator chip in the direction of light travel is inclined with respect to the optical axis of the incident light toward the optical isolator.

This enables the production of the optical axis shift type optical isolator in a simpler manner.

ADVANTAGEOUS EFFECTS OF INVENTION

As described above, according to the inventive optical isolator, the optical isolator can be configured to have a small optical device size while obtaining a large amount of beam shift (optical axis shift), and to secure a maximum effective diameter without degrading the optical characteristics of the optical isolator. According to the inventive method for producing an optical isolator, the production of such an optical isolator described above becomes possible.

BRIEF DESCRIPTION OF DRAWINGS

FIG. 1 shows an optical isolator according to the present invention.
FIG. 2 shows an optical isolator chip in an optical isolator according to the present invention.
FIG. 3 shows a configuration example of a single-stage optical isolator.
FIG. 4 shows a configuration example of a 1.5-stage optical isolator.
FIG. 5 is a drawing describing an optical isolator according to the first conventional example.
FIG. 6 is a drawing describing an optical isolator according to the first conventional example.
FIG. 7 is a drawing describing an optical isolator according to the second conventional example.
FIG. 8 shows a dependence of a forward insertion loss (dB) on an incident surface angle in an optical isolator.
FIG. 9 shows a dependence of a backward insertion loss (dB) on an incident surface angle in an optical isolator.
FIG. 10 shows a dependence of an extinction ratio of a glass polarizer on an incident surface angle.
FIG. 11 shows a dependence of an insertion loss of a glass polarizer on an incident surface angle.

DESCRIPTION OF EMBODIMENTS

Hereinafter, the present invention will be described in detail. However, the present invention is not limited thereto.

As described above, an optical isolator in a small optical device size while obtaining a large amount of beam shift (optical axis shift) without degrading optical characteristics of the optical isolator and a method for producing such an optical isolator have been required.

To solve the above problem, the present inventor has earnestly studied and found that an optical axis shift type optical isolator including one or more polarizers and one or more Faraday rotators arranged in a direction of light travel, and an optical isolator chip in which the polarizer and the Faraday rotator are bonded and integrated to form the optical isolator chip. An incident surface of the optical isolator chip in the optical isolator is a surface inclined at an angle of 40° (degrees) or less with respect to an optical axis of incident light toward the optical isolator, and the incident surface of the optical isolator chip is a surface inclined with respect to a central axis of the optical isolator chip in the direction of light travel. The central axis of the optical isolator chip in the direction of light travel is inclined with respect to the optical axis of the incident light toward the optical isolator. In addition, a shift length $\Delta T$ (mm) between the optical axis of the incident light toward the optical isolator and an optical axis of emitted light from the optical isolator, and an inclination displacement length $\Delta C$ (mm) between an emission surface side and an incident surface side of the optical isolator chip caused by the inclination of the central axis of the optical isolator chip in the direction of light travel, satisfy

$$|\Delta T - \Delta C| \leq 0.10 \ (mm).$$

Furthermore, the present inventor found that, according to this optical axis shift type optical isolator, the optical isolator can have a small optical device size while obtaining a large amount of beam shift (optical axis shift) and secure a maximum effective diameter without degrading optical characteristics of the optical isolator. Based on this finding, the present invention has been completed.

Moreover, the present inventor found that a method for producing an optical axis shift type optical isolator including one or more polarizers and one or more Faraday rotators arranged in a direction of light travel, and an optical isolator chip in which the polarizer and the Faraday rotator are bonded and integrated to form the optical isolator chip, the method including:

setting an incident surface of the optical isolator chip as a surface inclined with respect to a central axis of the optical isolator chip in the direction of light travel;

arranging the optical isolator chip such that the central axis of the optical isolator chip in the direction of light travel is inclined with respect to an optical axis of incident light toward the optical isolator; and

setting the incident surface of the optical isolator chip as a surface inclined at an angle of 40° (degrees) or less with respect to the optical axis of the incident light toward the optical isolator, and satisfying $|\Delta T - \Delta C| \leq 0.10$ (mm) in which a shift length $\Delta T$ (mm) is the length between the optical axis of the incident light toward the optical isolator and an optical axis of emitted light from the optical isolator, and an inclination displacement length $\Delta C$ (mm) is the length between an emission surface side and an incident surface side of the optical isolator chip caused by the inclination of the central axis of the optical isolator chip in the direction of light travel.

Furthermore, the present inventor found that according to this method for producing an optical axis shift type optical isolator, an optical isolator that can have a small optical device size while obtaining a large amount of beam shift (optical axis shift) and secure a maximum effective diameter without degrading optical characteristics of the optical isolator can be obtained. Based on this finding, the present invention has been completed.

Hereinafter, the description will be given with reference to drawings.

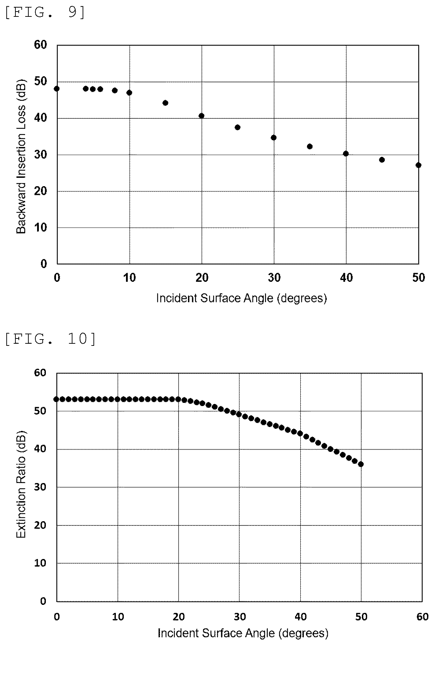

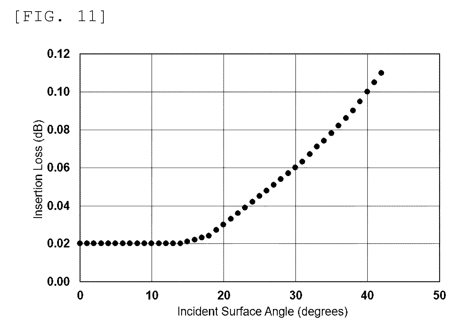

First, although conditions are different from a conventional use, the optical characteristics of the optical isolator are confirmed when an incident surface angle of the optical isolator is increased. The optical characteristics of the optical isolator depend on the incident surface angle of the incident light. When the incident angle is varied from 0 to 50° (degrees), it is found that backward insertion loss and forward insertion loss of the optical isolator change as shown in FIGs. 8 and 9, respectively. It is also found that a glass polarizer singly exhibits characteristics shown in FIGs. 10 and 11.

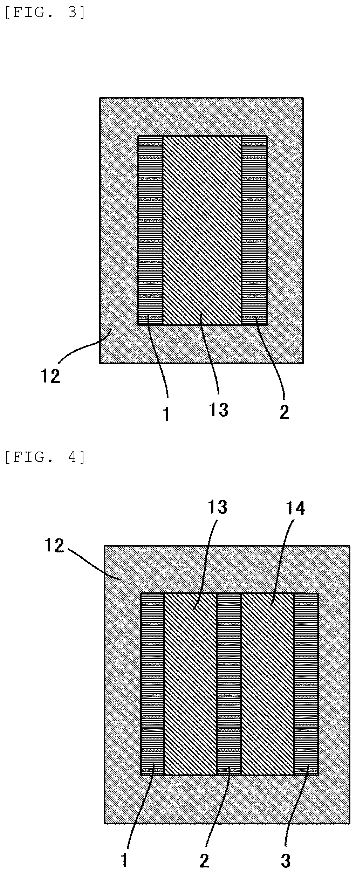

As shown in FIG. 8, it is found that an increase of an inclination angle of the incident surface of the optical isolator caused the forward insertion loss to gradually increase when the incident surface angle is 15° (degrees) and above, and as shown in FIG. 9, the backward insertion loss gradually decreases when the incident surface angle is 10° (degrees) and above. In general, in a one-stage configuration shown in FIG. 3 (two polarizers and one Faraday rotator), the forward insertion loss of 0.3 dB or less, and the backward insertion loss of 30 dB or more are required. In view of these optical characteristics, it is found that the inclination angle of the incident surface is required to be 40° (degrees) or less.

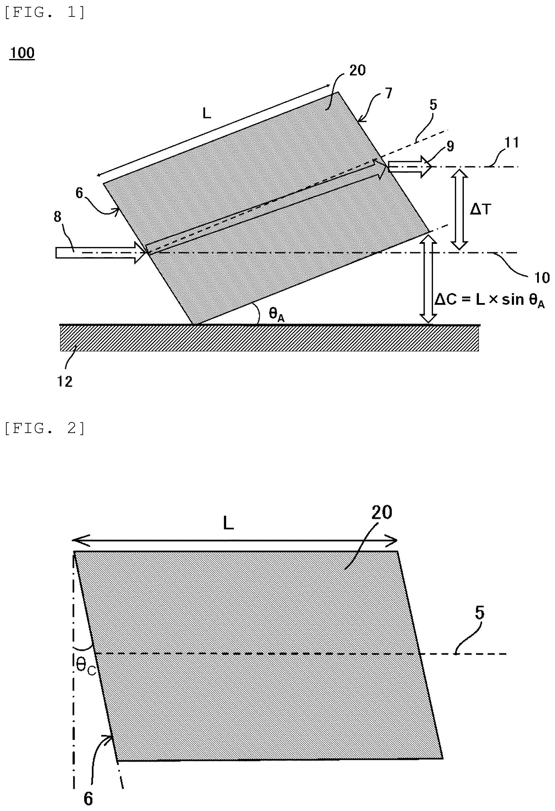

Consequently, the present inventor found out that, as shown in FIG. 2, to subject an incident surface 6 of optical isolator chip 20 to inclined processing (angle $\theta_C°$), and further arrange this optical isolator chip 20 to be inclined (angle $\theta_A°$) as shown in FIG. 1, and then satisfy

$$|\Delta T - \Delta C| \leq 0.1 \ mm$$

between inclination displacement length $\Delta C = L \times \sin\theta_A$ (mm), which is derived from the inclination of the optical isolator chip 20 (inclination angle: $\theta_A°$) and a length of a bottom surface thereof (= chip length L), and the shift length $\Delta T$ (mm). The present inventor also found that this enables prevention of degrading balance of transmission area between the incident surface 6 and an emission surface 7 while providing a function of large beam shift without unnecessarily enlarging (lengthening) a chip height CH of the optical isolator chip 20. This also allows the optical characteristics required for the optical isolator to be satisfied by setting the inclination angle of the incident surface 6 with respect to an incident light 8 to an angle of 40° (degrees) or less.

That is, the inventive optical axis shift type optical isolator includes one or more polarizers and one or more Faraday rotators arranged in the direction of light travel, and the optical isolator chip in which the polarizer and the Faraday rotator are bonded and integrated to form the optical isolator chip (for example, FIGs. 3 and 4).

In addition, as shown in FIG. 2, the incident surface 6 of the optical isolator chip 20 is a surface that is inclined (inclination angle: $\theta_C°$) with respect to a central axis 5 of the optical isolator chip 20 in the direction of light travel. Moreover, as shown in FIG. 1, the central axis 5 of the optical isolator chip 20 in the direction of light travel is arranged so as to incline (inclination angle: $\theta_A°$) with respect to an optical axis 10 of the incident light 8 toward the optical isolator 100. The optical axis shift type optical isolator 100 according to the present invention is configured such that the incident surface 6 of the optical isolator chip 20 in the optical isolator 100 is set to form a inclined surface having an angle of 40° (degrees) or less with respect to the optical axis 10 of the incident light 8 toward the optical isolator 100. This inclination is achieved by the inclined processing of the incident surface 6 of the optical isolator chip 20 (inclination angle: $\theta_C$°) and by the inclined arrangement of the optical isolator chip 20 (inclination angle: $\theta_A$°). Note that it is sufficient that the inclination angle of the incident surface 6 of the optical isolator chip 20 with respect to the optical axis 10 of the incident light 8 toward the optical isolator 100 is larger than 0° (degrees).

Moreover, the shift length $\Delta T$ (mm) and an inclination displacement length $\Delta C$ (mm) satisfy

$$|\Delta T - \Delta C| \leq 0.10 \ (mm),$$

in which the shift length $\Delta T$ (mm) is the length between the optical axis 10 of the incident light 8 toward the optical isolator 100 and an optical axis 11 of emitted light 9 from the optical isolator 100, and the inclination displacement length $\Delta C$ (mm) is the length between the emission surface 7 side and the incident surface 6 side of the optical isolator chip 20 caused by the inclination of the central axis 5 of the optical isolator chip 20 in the direction of light travel.

Such an optical axis shift type optical isolator 100 emits the emitted light 9 from the emission surface 7 at a location near the center of the emission surface 7; therefore, while obtaining a large amount of beam shift (optical axis shift), optical device size can be small, and a maximum effective diameter can be secured. Moreover, the optical characteristics of the optical isolator are not degraded.

It is preferable that the incident surface 6 of the optical isolator chip 20 in the optical isolator 100 is a surface inclined at an angle of 8° (degrees) or more with respect to the optical axis 10 of the incident light 8 toward the optical isolator 100. This allows for a greater amount of beam shift in the optical isolator 100.

Furthermore, as shown in FIG. 1, it is preferable that one side of the optical isolator chip 20 is arranged at an incline on a planar base 12 that includes a magnet, resulting in a simpler configuration.

Next, a method for producing an optical isolator according to the present invention will be described.

First, an optical isolator chip including one or more polarizers and one or more Faraday rotators in a direction of light travel in which the polarizer and the Faraday rotator are bonded and integrated (for example, FIGs. 3 and 4) is provided. Subsequently, as shown in FIG. 2, the incident surface 6 of the optical isolator chip 20 is subjected to inclined processing, such as cutting or polishing, so as to be an inclined surface (an angle $\theta_C$°) with respect to the central axis 5 of the optical isolator chip 20 in the direction of light travel.

Next, the optical isolator chip 20, which has been subjected to the inclined processing, is arranged such that the central axis 5 of the optical isolator chip 20 in the direction of light travel is inclined (angle $\theta_A$°) with respect to the optical axis 10 of the incident light 8 toward the optical isolator 100.

Moreover, the optical isolator chip 20 is arranged to set the incident surface 6 of the optical isolator chip 20 as a surface inclined at an angle of 40° (degrees) or less with respect to the optical axis 10 of the incident light 8 toward the optical isolator 100, and satisfying $|\Delta T - \Delta C| \leq 0.10$ (mm) in which the shift length $\Delta T$ (mm) is length between the optical axis 10 of the incident light 8 toward the optical isolator 100 and the optical axis 11 of the emitted light 9 from the optical isolator 100, and the inclination displacement length $\Delta C$ (mm) is a length between the emission surface 7 side and the incident surface 6 side of the optical isolator chip 20 caused by the inclination of the central axis 5 of the optical isolator chip 100 in the direction of light travel. This setting can be realized by adjusting the angles $\theta_C$° and $\theta_A$° described above.

The method for arranging the optical isolator chip 20 in this way is not particularly limited, but, for example, the chip can be arranged on the planar base 12 including the magnet by using adhesive or the like, and the inclination angle can be adjusted by adjusting an angle to attach the chip (such an adjustment can be realized by holding the chip at a specific angle using a jig prior to curing the adhesive and subsequently curing the adhesive).

Moreover, the lower limit of the angle of inclination of the incident surface of the optical isolator chip with respect to the optical axis of the incident light toward the optical isolator is not particularly limited, but, for example, can be the inclination angle of 8° (degrees) or more. This enables the production of the optical axis shift type optical isolator capable of obtaining a larger amount of beam shift.

EXAMPLE

Hereinafter, the present invention will be specifically described with reference to Examples. However, the present invention is not limited thereto.

(Example 1, Comparative Examples 1-1 and 1-2)

FIG. 3 shows a configuration example of a single-stage optical isolator used in this Example 1. A planar glass polarizer (Polarcor manufactured by Corning Incorporated) in which Ag particles were dispersed and oriented was used as a first polarizer 1 and a second polarizer 2. $(TbEuBi)_3(FeGa)_5O_{12}$ or $(GdBi)_3(FeGa)_5O_{12}$ was used for a Faraday rotator (first Faraday rotator 13).

An AR coat for air of 1550 nm was applied on surfaces of the first polarizer 1 and the second polarizer 2 (11 mm square, thickness of 0.2 mm, extinction performance of 52 dB). An anti-epoxy coat was applied to both surfaces of the 45.0-degree Faraday rotator (first Faraday rotator 13) (11 mm square, thickness of 0.54 mm) for 1550 nm, and the Faraday rotator was laminated with AR coat-free surfaces of the polarizers via epoxy adhesive. The first polarizer 1 and the second polarizer 2 were bonded and fixed to the Faraday rotators to have a relative angle of 45.0 degrees. Subsequently, the resulting laminate was cut and processed into a 1 mm square to make an optical isolator chip incident surface at a predetermined angle, and bonded and fixed to a permanent magnet, which was a base 12 (height 1.4 mm × width 0.8 mm × optical axis direction length 1.5 mm), (also bonded and arranged at individual inclination angles). Note that a thickness of an adhesive layer of the epoxy adhesive was approximately 0.005 to 0.008 mm.

Table 1 describes results of each of inclination angles of incident surfaces, shift length ΔT (beam shift amounts) between optical axes, and effective diameters and the like. In the optical isolator in Example 1, it is found that a maximum effective diameter was successfully secured while obtaining a large shift length between the optical axes without degrading optical characteristics of the optical isolator (inclination angle of incident surface was 40° or less). Note that during chip processing, it is required to take into account an effect of chipping during cutting processing and consider excluding the vicinity of a cutting edge from the effective diameter (for example, 0.02 mm from the chip cutting edge).

[Table 1]

| | Comparative Example 1-1 | Example 1 | | | | | | | | | | | Comparative Example 1-2 | |
|---|---|---|---|---|---|---|---|---|---|---|---|---|---|---|
| Inclination Angles of Incident Surface (°) | 0 | 4 | 5 | 6 | 8 | 10 | 15 | 20 | 25 | 30 | 35 | 40 | 45 | 50 |
| Optical Axis Shift Length (mm) : ΔT | 0.00 | 0.03 | 0.04 | 0.05 | 0.06 | 0.08 | 0.12 | 0.16 | 0.21 | 0.25 | 0.31 | 0.36 | 0.42 | 0.49 |
| Chip Inclined Processing Angle $\theta_C$(°) | 0 | 2 | 2 | 3 | 4 | 5 | 8 | 10 | 14 | 16 | 15 | 15 | 20 | 20 |
| ΔT-ΔC: (mm) | 0.00 | 0.00 | 0.01 | 0.00 | 0.00 | 0.00 | 0.00 | 0.00 | 0.02 | 0.01 | 0.02 | 0.04 | 0.02 | 0.08 |
| Effective Diameter (mm) | ≥0.85 | ≥0.85 | ≥0.85 | ≥0.85 | ≥0.85 | ≥0.85 | ≥0.85 | ≥0.85 | ≥0.85 | ≥0.85 | ≥0.85 | ≥0.85 | ≥0.85 | ≥0.85 |
| [Reference] Chip Inclined Processing = Effective Diameter of Inclination Angles of Incident Surface (mm) | ≥0.85 | ≥0.85 | ≥0.85 | 0.85 | 0.80 | ≤0.8 | ≤0.8 | ≤0.8 | ≤0.8 | ≤0.8 | ≤0.8 | ≤0.8 | ≤0.8 | ≤0.8 |
| [Reference] Inclined Processing Absent (Cuboid Chip) Effective Diameter of Inclined arrangement (mm) | ≥0.85 | ≥0.85 | ≥0.85 | 0.85 | 0.80 | ≤0.8 | ≤0.8 | ≤0.8 | ≤0.8 | ≤0.8 | ≤0.8 | ≤0.8 | ≤0.8 | ≤0.8 |

The effective diameters were trial-calculated, excluding the area up to 0.02 mm from the processed edge portion.

As shown in Table 1, when compared with a case shown in FIG. 7 where the inclined processing angle of the incident surface of the chip is simply equal to the inclination angle from the optical axis of an incident light (inclination angle of incident surface), as shown in Table 1, as [Reference] cases, or a case where the cuboid chip is arranged in an inclined manner to make the inclined arranging angle equal to the inclination angle from the optical axis of an incident light (inclination angle of incident surface), as shown in FIG. 6, it is found that the large effective diameters ($\varphi$ 0.85 mm), comparable to the size of the chip area, was stably maintained in Example 1.

(Example 2, Comparative Examples 2-1 and 2-2)

Evaluations were performed using the same configuration as Example 1, except that the thicknesses of the first polarizer 1 and the second polarizer 2 were set to 0.12 mm. The results are shown in Table 2.

[Table 2]

| | Comparative Example 2-1 | Example 2 | | | | | | | | | | | | Comparative Example 2-2 |
|---|---|---|---|---|---|---|---|---|---|---|---|---|---|---|
| Inclination Angles of Incident Surface (°) | 0 | 4 | 5 | 6 | 8 | 10 | 15 | 20 | 25 | 30 | 35 | 40 | 45 | 50 |
| Optical Axis Shift Length (mm) : $\Delta T$ | 0.00 | 0.03 | 0.03 | 0.04 | 0.06 | 0.07 | 0.11 | 0.14 | 0.18 | 0.22 | 0.27 | 0.32 | 0.37 | 0.43 |
| Chip Inclined Processing Angle $\theta_c$(°) | 0 | 2 | 2 | 3 | 4 | 5 | 8 | 10 | 10 | 10 | 15 | 15 | 20 | 20 |
| $\Delta T$-$\Delta C$: (mm) | 0.00 | 0.00 | 0.00 | 0.00 | 0.00 | 0.00 | 0.01 | 0.00 | 0.02 | 0.05 | 0.01 | 0.02 | 0.03 | 0.09 |
| Effective Diameter (mm) | ≥0.85 | ≥0.85 | ≥0.85 | ≥0.85 | ≥0.85 | ≥0.85 | ≥0.85 | ≥0.85 | ≥0.85 | ≥0.85 | ≥0.85 | ≥0.85 | ≥0.85 | ≥0.85 |
| [Reference] Chip Inclined Processing = Effective Diameter of Inclination Angles of Incident Surface (mm) | ≥0.85 | ≥0.85 | ≥0.85 | ≥0.85 | ≥0.85 | ≥0.85 | 0.85 | 0.80 | ≤0.8 | ≤0.8 | ≤0.8 | ≤0.8 | ≤0.8 | ≤0.8 |
| [Reference] Inclined Processing Absent (Cuboid Chip) Effective Diameter of Inclined arrangement (mm) | ≥0.85 | ≥0.85 | ≥0.85 | ≥0.85 | ≥0.85 | ≥0.85 | 0.85 | 0.80 | ≤0.8 | ≤0.8 | ≤0.8 | ≤0.8 | ≤0.8 | ≤0.8 |

The effective diameters were trial-calculated, excluding the area up to 0.02 mm from the processed edge portion.

(Example 3, Comparative Examples 3-1 and 3-2)

FIG. 4 shows a configuration example of a 1.5-stage optical isolator used in this Example 3. A planar glass polarizer in which Ag particles were dispersed and oriented was used as a first polarizer 1, a second polarizer 2 and a third polarizer 3. $(TbEuBi)_3(FeGa)_5O_{12}$ or $(GdBi)_3(FeGa)_5O_{12}$ was used for a first Faraday rotator 13 and a second Faraday rotator 14.

An AR coat for air of 1550 nm was applied on surfaces of the first polarizer 1 and the third polarizer 3 (11 mm square, thickness of 0.12 mm, extinction performance of 52 dB). An anti-epoxy coat was applied to both surfaces of the 45.0-degree Faraday rotators (11 mm square, thickness of 0.54 mm) for 1550 nm, and the Faraday rotators were laminated with AR coat-free surfaces of the polarizers via epoxy adhesive. The first, the second, and the third polarizers were bonded and fixed to the Faraday rotators to have a relative angle of 45.0 degrees between the first and the second polarizers, and between the second and the third polarizers. Subsequently, the resulting laminate was cut and processed into a 1 mm square to make a chip incident surface at a predetermined angle, and bonded and fixed to a permanent magnet (height 1.4 mm × width 0.8 mm × optical axis direction length 2.0 mm), (also bonded and arranged at individual inclination angles). Table 3 shows the results.

[Table 3]

| | Comparative Example 3-1 | Example 3 | | | | | | | | | | | Comparative Example 3-2 | |
|---|---|---|---|---|---|---|---|---|---|---|---|---|---|---|
| Inclination Angles of Incident Surface (°) | 0 | 4 | 5 | 6 | 8 | 10 | 15 | 20 | 25 | 30 | 35 | 40 | 45 | 50 |
| Optical Axis Shift Length (mm) : ΔT | 0.00 | 0.05 | 0.07 | 0.08 | 0.11 | 0.13 | 0.20 | 0.27 | 0.34 | 0.42 | 0.51 | 0.60 | 0.69 | 0.80 |
| Chip Inclined Processing Angle $\theta_c$ (°) | 0 | 2 | 2 | 4 | 4 | 4 | 8 | 10 | 10 | 10 | 15 | 15 | 20 | 20 |
| ΔT-ΔC: (mm) | 0.00 | 0.00 | 0.01 | 0.03 | 0.05 | 0.08 | 0.02 | 0.02 | 0.04 | 0.08 | 0.00 | 0.03 | 0.07 | 0.07 |
| Effective Diameter (mm) | ≥0.85 | ≥0.85 | ≥0.85 | ≥0.85 | ≥0.85 | ≥0.85 | ≥0.85 | ≥0.85 | ≥0.85 | ≥0.85 | ≥0.85 | ≥0.85 | ≥0.85 | ≥0.85 |
| [Reference] Chip Inclined Processing = Effective Diameter of Inclination Angles of Incident Surface (mm) | ≥0.85 | ≥0.85 | ≥0.85 | ≥0.85 | 0.85 | 0.80 | ≤0.8 | ≤0.8 | ≤0.8 | ≤0.8 | ≤0.8 | ≤0.8 | ≤0.8 | ≤0.8 |
| [Reference] Inclined Processing Absent (Cuboid Chip) Effective Diameter of Inclined arrangement (mm) | ≥0.85 | ≥0.85 | ≥0.85 | ≥0.85 | 0.85 | 0.80 | ≤0.8 | ≤0.8 | ≤0.8 | ≤0.8 | ≤0.8 | ≤0.8 | ≤0.8 | ≤0.8 |

The effective diameters were trial-calculated, excluding the area up to 0.02 mm from the processed end portion.

As shown in Tables 2 and 3, it is found that, even in the optical isolators in Examples 2 and 3, the maximum effective diameter was successfully secured while obtaining a large shift length between the optical axes without degrading optical characteristics of the optical isolator (inclination angle of incident surface was 40° or less). Moreover, even when the exclusion of the vicinity of the cutting edge from the effective diameter is considered, it is found that the large effective diameters ($\varphi$ 0.85 mm), comparable to the size of the chip area, were stably maintained, as in Example 1.

As described above, according to Examples of the present invention, the optical isolators having a small optical device size while obtaining a large amount of beam shift, securing the maximum effective diameter without degrading the optical characteristics of the optical isolator, were successfully obtained.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

**Claims**

1. An optical axis shift type optical isolator comprising one or more polarizers and one or more Faraday rotators arranged in a direction of light travel, and an optical isolator chip in which the polarizer and the Faraday rotator are bonded and integrated to form the optical isolator chip, wherein

    an incident surface of the optical isolator chip in the optical isolator is a surface inclined at an angle of 40° (degrees) or less with respect to an optical axis of incident light toward the optical isolator,
    the incident surface of the optical isolator chip is a surface inclined with respect to a central axis of the optical isolator chip in the direction of light travel,
    the central axis of the optical isolator chip in the direction of light travel is inclined with respect to the optical axis of the incident light toward the optical isolator,
    a shift length $\Delta T$ (mm) between the optical axis of the incident light toward the optical isolator and an optical axis of emitted light from the optical isolator, and an inclination displacement length $\Delta C$ (mm) between an emission surface side and an incident surface side of the optical isolator chip caused by the inclination of the central axis of the optical isolator chip in the direction of light travel, satisfy

$$|\Delta T - \Delta C| \leq 0.10 \ (mm).$$

2. The optical axis shift type optical isolator according to claim 1, wherein
    the incident surface of the optical isolator chip in the optical isolator is a surface inclined at an angle of 8° (degrees) or more with respect to the optical axis of the incident light toward the optical isolator.

3. The optical axis shift type optical isolator according to claim 1 or 2, wherein
    one side of the optical isolator chip is arranged at an incline on a planar base including a magnet.

4. A method for producing an optical axis shift type optical isolator comprising one or more polarizers and one or more Faraday rotators arranged in a direction of light travel, and an optical isolator chip in which the polarizer and the Faraday rotator are bonded and integrated to form the optical isolator chip, the method comprising:

    setting an incident surface of the optical isolator chip as a surface inclined with respect to a central axis of the optical isolator chip in the direction of light travel;
    arranging the optical isolator chip such that the central axis of the optical isolator chip in the direction of light travel is inclined with respect to an optical axis of incident light toward the optical isolator; and
    setting the incident surface of the optical isolator chip as a surface inclined at an angle of 40° (degrees) or less with respect to the optical axis of the incident light toward the optical isolator, and satisfying $|\Delta T - \Delta C| \leq 0.10$ (mm) in which a shift length $\Delta T$ (mm) is the length between the optical axis of the incident light toward the optical isolator and an optical axis of emitted light from the optical isolator, and an inclination displacement length $\Delta C$ (mm) is a length between an emission surface side and an incident surface side of the optical isolator chip caused by the inclination of the central axis of the optical isolator chip in the direction of light travel.

5. The method for producing an optical axis shift type optical isolator according to claim 4, wherein

the incident surface of the optical isolator chip is a surface inclined at an angle of 8° (degrees) or more with respect to the optical axis of the incident light toward the optical isolator.

6. The method for producing an optical axis shift type optical isolator according to claim 4 or 5, wherein one side of the optical isolator chip is arranged at an inclination on a planar base including a magnet, such that the central axis of the optical isolator chip in the direction of light travel is inclined with respect to the optical axis of the incident light toward the optical isolator.

[FIG. 1]

<u>100</u>

$$\Delta C = L \times \sin \theta_A$$

[FIG. 2]

[FIG. 3]

12    1    13    2

[FIG. 4]

13    14

12

1    2    3

[FIG. 5]

[FIG. 6]

[FIG. 7]

**300**

[FIG. 8]

[FIG. 9]

[FIG. 10]

[FIG. 11]

## INTERNATIONAL SEARCH REPORT

| | International application No. |
|---|---|
| | **PCT/JP2023/044327** |

**A. CLASSIFICATION OF SUBJECT MATTER**

**G02B 27/28**(2006.01)i; **G02B 5/30**(2006.01)i
FI: G02B27/28 A; G02B5/30

According to International Patent Classification (IPC) or to both national classification and IPC

**B. FIELDS SEARCHED**

Minimum documentation searched (classification system followed by classification symbols)

G02B27/28; G02B5/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2003-167218 A (NAMIKI PRECISION JEWEL COMPANY, LIMITED) 13 June 2003 (2003-06-13) paragraphs [0023]-[0035], fig. 4 | 1-6 |
| Y | JP 2002-182155 A (KYOCERA CORPORATION) 26 June 2002 (2002-06-26) paragraphs [0003]-[0005], fig. 6 | 1-6 |
| Y | JP 2001-125045 A (TOKIN CORP) 11 May 2001 (2001-05-11) paragraph [0023], fig. 1 | 3, 6 |
| A | JP 61-102621 A (FUJITSU LIMITED) 21 May 1986 (1986-05-21) entire text, all drawings | 1-6 |
| A | JP 61-45219 A (FUJITSU LIMITED) 05 March 1986 (1986-03-05) entire text, all drawings | 1-6 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **24 January 2024** | **06 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

International application No.

**PCT/JP2023/044327**

| Patent document cited in search report | | | Publication date (day/month/year) | Patent family member(s) | Publication date (day/month/year) |
|---|---|---|---|---|---|
| JP | 2003-167218 | A | 13 June 2003 | (Family: none) | |
| JP | 2002-182155 | A | 26 June 2002 | (Family: none) | |
| JP | 2001-125045 | A | 11 May 2001 | US 6529324 B1<br>column 5, lines 16-43, fig. 4<br>EP 1096299 A1<br>KR 10-2001-0060216 A<br>CN 1295263 A<br>CA 2324530 A1 | |
| JP | 61-102621 | A | 21 May 1986 | (Family: none) | |
| JP | 61-45219 | A | 05 March 1986 | (Family: none) | |

Form PCT/ISA/210 (patent family annex) (July 2022)

**EP 4 644 971 A1**

**Patent documents cited in the description**

- JP 2018036594 A